# EUROPEAN PATENT SPECIFICATION

(11) **EP 4 465 127 B1**
(45) Date of publication and mention of the grant of the patent: **19.08.2026**
(21) Application number: 24204362.8
(22) Date of filing: 07.10.2015
(51) Int. Cl.: G02F 1/1503, G02F 1/161, G02F 1/1516, G02F 1/1514

(54) **ELECTROCHROMIC PANEL**
ELEKTROCHROME VORRICHTUNG
DISPOSITIF ÉLECTROCHROMIQUE

(43) Date of publication of application: 20.11.2024
(62) Document number(s) of the earlier application(s) in accordance with Art. 76 EPC: 15905939.3 / 3 360 008
(73) Proprietor: Vitro Flat Glass LLC, Cheswick PA 15024 (US)
(72) Inventor: VASILIEV, Evgeniy, Vladimirovich, Cheswick, PA, 15024 (US); BORISOV, Sergey, Olegovich, Cheswick, PA, 15024 (US); ZAIKIN, Pavel, Anatolievich, Cheswick, PA, 15024 (US); RUGLIKOV, Nikita, Valerievich, Cheswick, PA, 15024 (US)
(74) Representative: Sandri, Sandro

(56) References cited:
- CN-A- 103 116 239
- US-A- 5 080 470
- US-A1- 2006 050 357
- US-A1- 2010 315 693

## Description

### BACKGROUND OF THE INVENTION

### Field of the Invention

The invention relates to the field of devices that change color under the effect of an electric current, in particular, to electrochromic devices and methods of their manufacture. Various methods for manufacturing devices with electrically adjustable light-absorption properties, such as variable optical density filters, light modulators, information boards, and image-display panels are known in the art.

### Description of the Related Art

Electrochromism is a physical phenomenon found in certain compositions of reversibly changing predetermined optical properties such as color or light transmittance with an application of an electrical voltage called a control voltage. Electrochromism provides the basis for operation of various electrochromic devices, such as smart glass well known to persons of ordinary skill in the art. Various types of optical materials and structures can be used to construct the aforesaid compounds with electrochromic properties, with the specific structures being dependent on the specific purpose of the electrochromic device.

Known in the art is a method of manufacturing an electrochromic device (U.S. Patent No. 4,902,108 issued on 02/20/1990) wherein an electrically conductive coating of one of two optically transparent electrodes is coated with a thickened solution of polymethylmethacrylate in a low-boiling-point solvent, the solvent then evaporating to yield a layer of polymethylmethacrylate. Following this step, both optically transparent electrodes bond to each other on the perimeter while the electrodes are spaced at a predetermined distance from one another, and the thus-formed space is filled through an opening (openings) in the adhesive with an electrochromic solution that contains cathodic and anodic components; the filled space is then sealed. The layer of polymethylmethacrylate is dissolved, and, as a result, the electrochromic solution thickens, and this significantly reduces the negative effect of gravitational "delamination" of the composition in the electrically colored state. Thus, the electrochromic composition is actually prepared only after the completion of the assembly of the aforementioned electrochromic device. In addition, the electrochromic composition is a liquid phase having viscosity defined by the amount of polymeric thickener, and the indifferent electrolyte solution introduced into the electrochromic solution provides electroconductivity of the latter if the cathodic and anodic components are not soluble in the ionic state. An indifferent electrolyte is introduced into compositions based on quaternary salts of bipyridine.

Also known in the art is a method for manufacturing an electrochromic device (U.S. Patent No. 5,471,337 issued on 11/28/1995) wherein the space between the electrodes is filled with an electrochromic dispersion system comprising the following: a dispersion medium in the form of a solvent that is thickened, preferably, with polymethylmethacrylate or is plasticized with a polymer solvent; a dispersion phase in the form of polyoxomethalate as the cathodic component; and an anodic component.

Additionally known are methods for making an electrochromic device by obtaining a solid-like film of an electrochromic composition directly in the device itself by polymerization alone and/or polymerization with crosslinking of monomer chains with the use of initiators of different types (EP 0612826 A1 of 08/31/1994; WO 97/34186 of 09/18/1997; and WO 98/42796 of 10/01/1998). However, such polymerization reactions are accompanied by volume shrinkage adversely affecting the quality of the electrochromic device. This negative effect can be particularly manifested in electrochromic devices with large interelectrode spaces (1 to 2 mm) usually provided in electrochromic devices having large work surfaces (more than 0.5 m2).

Also known in the art is a method for manufacturing a flexible electrochromic panel, which is disclosed in U.S. Patent No. 7,826,124 B2 issued on 10/02/2008, wherein insoluble polymeric chains of an organic material are applied onto one of the electrodes by electrochemical polymerization, and an ion storage film interacting with the polymeric chains of the first electrode is applied onto the counter electrode. A serious drawback of this technique is that a liquid electrolyte is needed for an effective interaction between the two layers deposited onto the flexible electrodes. On the other hand, the presence of a liquid electrolyte requires additional efforts and/or structures to maintain the electrochromic panel at a fixed thickness, and this, in turn, significantly complicates both the structure and method of the device manufacture.

Furthermore, also known in the art is a method for manufacturing a flexible electrochromic panel disclosed in U.S. Patent No. 7,256,925 B2 issued on 07/10/2006, which involves locally applying, onto one of the electrodes, a semiconductor portion, which is then coated with an electrochromic composition. However, this design also requires the use of a liquid electrolyte between the electrochromic portion and the counter electrode, which makes it subject to the same drawbacks as the previously discussed method.

Document US 2010/0315693 A1, with its abstract, describes variable transmittance optical filters capable of transitioning from a light state to a dark state on exposure to UV radiation and from a dark state to a light state with application of an electric voltage. The optical filters comprise a switching material that comprises one or more chromophores that have electrochromic and photochromic properties.

Document US 2006/0050357 A1, with its abstract, describes a method for producing electrochromic devices, in particular that having a large working surface area and which does not produce a volumetric shrinkage and can operate during a long maintenance of electrocoloured state of an electrochromic compound, high control voltages and polarity inversion. The electrochromic device comprises at least two electrodes, at least one of them being optically transparent. A closed sealed space is formed between said electrodes and filled with the electrochromic compound which is embodied in the form of a solid-like film. The method for producing the electrochromic device consists in prefabricating an initial electrochromic compound in the form of a dispersed electrochromic system which contains at least a suspension and/or colloid. The dispersed medium of said system is embodied in the form of an electrochromic solution containing a liquid solvent, cathode and anode components, a disperse phase being embodied in the form of a finely dispersed polymer. Afterwards, the initial electrochromic compound is deaerated, thereby eliminating dissolved oxygen and air introduced by said finely dispersed polymer, and is used for filling the space between the electrodes.

Document CN 103 116 239 A, with its abstract, describes an electrochromic display device and a manufacturing method thereof. The electrochromic display device comprises a first base plate, a second base plate and an electrochromic fluid filled between the first base plate and the second base plate. Each of the first base plate and the second base plate comprises a substrate and a pixel electrode layer. The first base plate is provided with a plurality of grooves, and the electrochromic fluid is filled in the grooves isolately. Since the electrochromic fluid is filled in the grooves arranged on the first base plate and isolated in the grooves of each pixel area, crosstalk between adjacent pixels can be avoided.

Document US 5080470 A, with its abstract, describes a process for manufacturing a light-modulating device comprising picture element, the process comprising steps of applying (by means of the "thick film" techniques such as silk-screen techniques) a layer of electrolytic material, and then applying a layer of counter-electrode material divided into portions of a layer defined and distributed according to a surface pattern coordinated with a surface pattern of transparent electrodes.

Therefore, new and improved methods for manufacturing of electrochromic devices are needed that would not be subject to the above deficiencies of the conventional technology.

### SUMMARY OF THE INVENTION

The present disclosure is directed to an electrochromic device manufactured by a method that substantially obviates one or more of the above and other problems associated with conventional methods for manufacturing electrochromic devices.

In accordance with one aspect of the embodiments described herein, there is provided an electrochromic device comprising at least two flexible electrodes and a hermetically closed space between the at least two flexible electrodes, at least one of the at least two flexible electrodes being optically transparent, wherein the hermetically closed space between the at least two flexible electrodes is filled with an electrochromic composition, the electrochromic device being manufactured by a method comprising the steps defined at claim 1. The dependent claims outline advantageous forms of embodiment of the electrochromic device.

The final configuration of the electrochromic panel is determined by the configuration of the layers of conductive coatings disposed on the polymeric substrate, which are electrically insulated from one another. Using the aforesaid conductive layers of square shape allows to manufacture the electrochromic panel having a shape of a matrix.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification, serve to explain and illustrate principles of the inventive technique. Specifically:

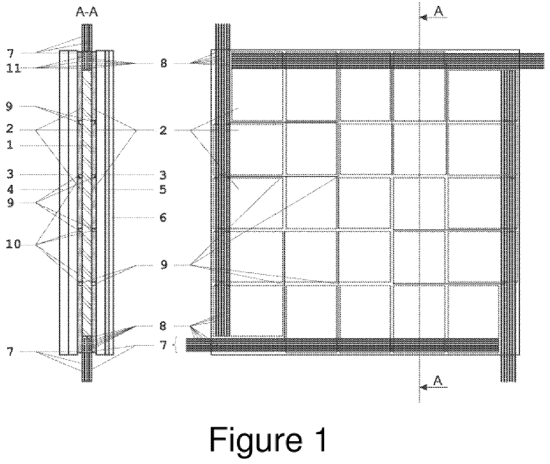

Figure 1 shows an electrochromic panel with two optically transparent electrodes in the form of twenty five mutually isolated current- conductive square-shaped portions.

### DETAILED DESCRIPTION OF THE PREFERRED EMBODIMENT

In the following detailed description, reference will be made to the accompanying drawing(s), in which identical functional elements are designated with like numerals. The aforementioned accompanying drawings show by way of illustration, and not by way of limitation, specific embodiments and implementations consistent with principles of the present invention.

In accordance with the present invention, there is provided an electrochromic device with an electrochromic composition in the form of a solid polymer layer that has an increased rate of discoloration in a wide temperature range and that imparts stability to the electrochromic device operating under conditions that maintain a long-term colored state and allow for low-voltage control and change of electrode polarity, which result in long-term uniformity of coloration and discoloration, especially for electrochromic devices having large work surface areas. Exemplary electrochromic compositions usable in connection with the described electrochromic device are disclosed in co-pending PCT application No. PCT/US15/54335, entitled "ELECTROCHROMIC COMPOSITION AND ELECTROCHROMIC DEVICE USING SAME".

In accordance with another aspect described herein, there is provided an electrochromic device comprising at least two electrodes, wherein the electrodes are flexible and optically transparent and the interelectrode space is sealed and filled with the prepared electrochromic composition, as described above. The described device achieves long-term stability of a colored state and may operate under conditions that allow for low-voltage control and reversal of electrode polarity, resulting in uniformity of coloration and discoloration. In addition, the described electrochromic device may be manufactured to have a large surface area.

The aforesaid electrochromic solution may additionally contain an indifferent electrolyte. Provision of an indifferent electrolyte additionally introduced into the dispersion medium accelerates discoloration of the electrically activated electrochromic device and prevents violation of uniformity in coloration and discoloration after operation of the electrochromic device under conditions of long-term polarization with application of DC voltage and/or after application of high (excessive, breakdown) voltage.

It is desirable to use a finely divided polymer and a high-temperature solvent in quantities and ratios sufficient to form a solid, but flexible layer of an electrochromic composition, which is characterized by lack of brittleness when bent, can provide flexibility, and keep its integrity over a wide temperature range.

The low-temperature solvent may be used to impart to the initial electrochromic composition low viscosity to allow the formation of an electrochromic layer on different substrates by known industrial methods such as gravitational spreading, substrate immersion coating, roll coating, dip coating, spin coating, flow coating or the like.

After the low-temperature solvent is removed (e.g., by evaporating, including evaporation by heating), a solid but flexible electrochromic layer is formed on the substrate.

One or both of the aforesaid low- temperature and high-temperature solvents, may comprise an individual chemical compound or mixture of chemical compounds.

The cathodic component may be an individual organic electrochromic compound having at polarograms at least one reversible reduction wave or a mixture of such organic electrochromic compounds. The anodic component may be an individual organic electrochromic compound having at polarograms at least one reversible oxidation wave or a mixture of organic electrochromic compounds.

The composition may further contain UV stabilizers, which protect the electrochromic composition from UV radiation. The composition also may additionally contain antioxidants that protect the electrochromic composition from adverse effects caused by its exposure to oxygen.

All the procedures relating to the manufacture and assembly of the electrochromic device may be carried out in an atmosphere of inert gas such as argon, nitrogen, carbon dioxide, etc. This will reduce the adverse effects of atmospheric oxygen on the electrochromic composition.

The aforementioned electrochromic device may be manufactured by using flexible, optically transparent electrodes, which consist of a polymeric (e.g., polyethylene terephthalate), or a glass substrate coated on one side with a transparent conductive portion such as doped indium oxide (In₂O₃), or doped tin oxide (SnO₂), or a metal mesh. Such coatings can be used individually or in combinations. The electrodes are sealed so that the conductive coating appears inside the closed space formed between the electrodes and filled with the electrochromic layer to prevent contact between the electrodes. A distance between the electrodes is determined by the thickness of the solid electrochromic layer, which is obtained after the electrochromic liquid composition has dried.

The electrochromic device is provided with electrically conducting buses arranged over the outer perimeter or along the long sides of the electrodes. These electrically conducting buses can be located either directly outside or inside the device with externally located output wires or other types of electrical contacts or connectors.

Fig. 1 shows an embodiment of an electrochromic panel with two optically transparent electrodes in the form of twenty-five conductive mutually isolated square- shaped portions. Also shown is a cross-sectional view of the electrochromic panel. The illustrated electrochromic panel contains flexible, optically transparent square-shaped electrodes 2, which are applied to a pair of substrates 3 in a quantity of twenty-five per each substrate. The substrates 3 are polymeric films, the surface area of which depends on the specific use of the electrochromic panel. A space between the substrates 3 with the square-shaped optically transparent electrodes 2 applied onto their surfaces is filled with an electrochromic layer 1.

Electric current-conducting buses 7 are routed over the perimeter or along some sides of the electrochromic panel. The dimension of these electrically conducting buses 7 depends on the quantity of conductive portions. Alternatively, it is possible to use double electrically conducting buses 7 for the upper and lower transparent conductive electrodes, respectively. The cross-sectional diameter of bus conductors 8 that form the buses 7 is determined on the basis of the area occupied by the conductive portion 2 and properties of the electrochromic layer 1.

The square-shaped conductive portions 2, which are arranged in a matrix along the periphery of the electrochromic panel, are directly electrically connected to the corresponding conductors of eight electrically conducting buses 7. The device is also provided with conductive contact line 9 intended for connection to the respective buses (lines) of those internal square-shaped conductive portions 2, which are located not at the periphery of the electrochromic panel. Each conductive contact line 9 is guided to one square-shaped conductive portion and is isolated from other lines. The other end of the each conductive contact line is connected to a predetermined conductor 8 of the electrically conducting bus 7.

The electrochromic layer 1 is located between the transparent conductive electrodes. The electrochromic layer may be continuous without breaks at the boundaries of the square-shaped conductive portions 2. The thickness of the electrochromic layer is determined based on the properties of the electrochromic composition and the requirements for the electrochromic panel. The electrochromic layer may be different in composition and properties at different portions corresponding to different square-shaped conductive portions. Accordingly, the electrochromic layer may be colored in different colors at different portions corresponding to different square-shaped conductive portions. The electrochromic layer may be different in composition and properties within the limits of a portion of a conductive portion corresponding to a certain square-shaped conductive portion. Accordingly, the electrochromic layer may be colored in different colors within the limits of one portion that corresponds to a predetermined square-shaped conductive portion.

The square-shaped conductive portion arranged in a matrix over the perimeter of the electrochromic panel can be connected by means of a conductive compound 11. Connection of the conductive contact lines 9 with the inner square-shaped conductive portions (which are located not on the panel periphery) also can be made with the conductive compound 11.

The sealing of the electrochromic layerof the electrochromic panels is effected either by gluing loops around the perimeter of the panel or by using sealants that prevent the penetration of atmospheric oxygen into the electrochromic layer.

An adhesive layer 5 that ensures adhesion of the electrochromic panel to the glass can be applied onto the panel-facing side of the electrochromic panel. The adhesive layer 5 that ensures adhesion of the electrochromic panel to the glass can be coated with a peelable protective film 6. Before attaching the electrochromic panel to the glass, the protective film 6 is removed. Any other self- adhesive tapes can be used instead of the adhesive layer 5.

The transparent conductive electrodes of the electrochromic panel facing outward also may be coated with protective layers 4. The protective layers 4 may comprise layers that protect the electrochromic panel from mechanical effects, as well as from UV and IR radiation. The use of a single that combines all these protective properties is also an option.

Fig. 1 illustrates an exemplary embodiment of a design in which the electrochromic panel has conductive portions having a square configuration. In such a design the electrochromic panel has a common electrochromic layer 1 disposed between two flexible transparent conductive electrodes. Each transparent conductive electrode comprises a polymeric substrate 3 coated with a conductive metal mesh 2 divided into square portions. In total, twenty five square conductive portions are used.

Arranged over the periphery (perimeter) of the electrochromic panel are electrically conducting buses 7. Each such bus 7 contains six or seven electrically conducting wires 8.

The square conductive portions 2 arranged over the periphery (perimeter) of the panel are connected to the electrically conducting buses 7 by means of the compound 11, while those square conductive portions which are located inside the electrochromic panel are connected to the perimeter of the electrochromic panel by conductive contact lines 9. Along the perimeter of electrochromic panel the conductive contact lines 9 are connected to the bus wires 8 by means of conductive compound 11.

Gaps between the square conductive portions 2 are filled with an insulating compound 10.

One of the flexible transparent conductive electrodes of the electrochromic panel is coated with the adhesive layer 5, which, in turn, is coated with the protective film 6. Another flexible transparent conductive electrode of the electrochromic panel is coated with the protective layer 4.

The electrically conducting buses 7 arranged over the periphery (perimeter) of the electrochromic panel are connected to the control unit / power supply (not shown) which supplies the required voltage and current to each square conductor portion 2.

### Example 1

In the first example, an electrochromic device was made with two flexible, optically transparent electrodes. Each flexible electrode comprised a polyethylene terephthalate substrate having a thickness of 175 microns and coated with a single layer of indium-doped SnO₂ having the surface electrical resistance of 30 Ohm/cm². The size of each electrode was 5×6 cm². One electrode was uniformly coated with an electrochromic composition that contained the following components: a viologen derivative (1.5 mass%) and a ferrocene derivative (0.75 mass%) in solvents, i.e., propylene carbonate and/or acetone; and a dispersed phase (35 mass%) of a copolymer of polymethyl methacrylate, methacrylic acid, and a calcium salt of the latter. The electrochromic composition was dried for 20 hours to form a solid electrochromic layer on the flexible electrode having a thickness of 100 microns. Then, a second flexible electrode was laminated over the dried electrochromic layer at a temperature of 100°C with a 5 mm offset with respect to the first layer. Copper tapes connectable to the leads of the control/power unit were then pasted by means of a conductive adhesive composition to the uncoated areas of the flexible electrodes facing the conductive coatings.

In this example the electrochromic device had light transmission in the visible range of the spectrum equal to 75%. Supply to the device of 2V DC current changed its color to intensive blue. The time of full color change from clear to dark blue was 7 seconds. After completion of the transient period, the application of voltage was stopped and the electrodes were short-circuited. The electrochromic device returned to its original (transparent) state within about 10 seconds.

### Example 2

In the second example, the electrochromic device was manufactured by the same way as described in Example 1, except that each flexible electrode comprised a polyethylene terephthalate substrate having a thickness of 100 microns coated with a metallic copper mesh with a cell size of 300 microns and with the surface electrical resistance equal to 2 Ohm/cm².

In this example of the electrochromic device, the light transmission in the visible range of the spectrum was 80%. Supply to the device of DC 2V current changed the color of its electrochromic layer to the intense blue. Time of full color change from clear to dark blue was 4 seconds. After completion of the transient period, the application of voltage was stopped and the electrodes were short-circuited. The electrochromic device returned to its original (transparent) state within about 6 seconds.

### Example 3

In the third example, the electrochromic device was manufactured by the same way as described in Example 2, except that the electrochromic composition was applied uniformly to each electrode in the half amount. After drying of the electrochromic layers, the flexible electrodes were laminated with the applied layers facing each other. Such a treatment made it possible to obtain the electrochromic device with uniform adhesion of the electrochromic layer to the flexible electrodes.

In thisexample, an electrochromic device had a light transmission in the visible range of the spectrum equal to 80%. Supply to the device of DC 2V current changed the color of its electrochromic layer to the intense blue. Time of full color change from clear to dark blue was 4 seconds. After completion of the transient period, the application of voltage was stopped and the electrodes were short-circuited. The electrochromic device returned to its original (transparent) state within about 6 seconds. In this case, the electrochromic layer showed more uniform color than in the case of the device described in Example 2.

### Example 4

In the fourth example, the electrochromic device was manufactured by the same way as described in Example 3, except that one of the flexible electrodes comprised a polyethylene terephthalate substrate having dimensions of 12×10 cm² and a thickness of 100 microns coated with a metallic copper mesh divided into four bands, each of which had dimensions of 3×10 cm². The second flexible electrode comprised a polyethylene terephthalate substrate having dimensions of 12×10 cm² coated with a continuous metallic copper mesh. In the completed state the flexible electrode with a continuous copper mesh was connected to one wire of the bus, while each flexible copper band of the second flexible electrode was connected to a separate wire of the bus.

In this example of the electrochromic device, the flexible electrode with a continuous copper mesh obtained a 0 potential, while each copper band of the second flexible electrode could be independently supplied with -2V, 0, or +2 V. When any of the bands received -2V or +2V, the electrochromic layer of this band within 5 seconds changed its color to intense blue. Change of the voltage to the opposite one led within 2 seconds to discoloration of the respective band to 50% of the initial darkening and then to restoration of intense blue color over a time of about 2 seconds.

### Example 5

In the fifth example, the electrochromic device was manufactured by the same way as described in Example 4, except that one of the flexible electrode comprised a polyethylene terephthalate substrate having the size of 10×10 cm² and the thickness of 100 microns with a metallic copper mesh applied onto this flexible electrode and divided into nine squares each having dimensions of 2.6 c 2.6 cm². The square located in the middle had a contact line disposed in the gap between the other squares guided to the contact pad located on the edge of the flexible electrode. The second flexible electrode comprised a polyethylene terephthalate substrate having dimensions of 10×10 cm² and coated with a continuous metallic copper mesh. In the completed state the flexible electrode with a continuous copper mesh was connected to one wire of the bus, while each flexible copper band of the second flexible electrode was connected to a separate wire of the bus.

In this example of the electrochromic device, the flexible electrode with the solid copper mesh was set to a zero potential, while each square copper electrode of the second flexible electrode could independently receive the potentials of -2 V, 0, or +2 V. When any of the squares received potentials of -2 or +2, the color of the electrochromic layer of the respective band changed within 4 seconds to intense blue.
To accelerate the discoloration of any square portion of the electrochromic device, first the opposite potential was applied to provide 50% discoloration, and then this square portion was short-circuited with the second flexible electrode. In this case, discoloration of the respective square portion occurred within 4 seconds.

## Claims

1. An electrochromic device comprising at least two flexible electrodes (2) and a hermetically closed space between the at least two flexible electrodes, at least one of the at least two flexible electrodes being optically transparent, wherein the hermetically closed space between the at least two flexible electrodes is filled with an electrochromic composition, the electrochromic device being manufactured by a method comprising:
(1) preparing an initial electrochromic composition in the form of an electrochromic dispersion system containing at least one of a suspension and a colloid, wherein a dispersion medium of the electrochromic dispersion system comprises an electrochromic solution comprising liquid solvents which comprises a high-temperature solvent and a low-temperature solvent, a cathodic component, and an anodic component, wherein a dispersion phase of the electrochromic dispersion system comprises a finely divided polymer;
(2) manufacturing at least one of the two flexible electrodes (2) in such a manner that a conductive coating is applied onto a polymeric substrate in the form of mutually isolated conductive portions of a square shape arranged in a matrix;
(3) coating at least one of the flexible electrodes (2) with the initial electrochromic composition;
(4) drying the initial electrochromic composition applied onto the flexible electrode(s) (2) for removing the low-temperature solvent to form a solid homogeneous uniform electrochromic layer (1);
(5) laminating the flexible electrode with the dried electrochromic composition with the other flexible electrode (2);
(6) connecting all the portions of the flexible electrodes (2) to electrically conducting buses (7); and
(7) sealing the hermetically closed space between the two flexible electrodes (2).

2. The electrochromic device of claim 1, wherein the electrochromic solution further comprises an indifferent electrolyte.

3. The electrochromic device of claim 1, wherein the finely divided polymer is provided in an amount sufficient to form a solid layer of the initial electrochromic composition.

4. The electrochromic device of claim 1, wherein the high-temperature solvent and/or the low-temperature solvent individually or in combination comprise a chemical compound or mixture of chemical compounds.

## Patentansprüche

1. Elektrochromes Bauelement, umfassend mindestens zwei flexible Elektroden (2) und einen hermetisch geschlossenen Raum zwischen den mindestens zwei flexiblen Elektroden,
wobei mindestens eine der mindestens zwei flexiblen Elektroden optisch transparent ist, wobei der hermetisch geschlossene Raum zwischen den mindestens zwei flexiblen Elektroden mit einer elektrochromen Zusammensetzung gefüllt ist, wobei das elektrochrome Bauelement durch ein Verfahren hergestellt wird, das umfasst:
(1) Herstellen einer Ausgangselektrochromen-Zusammensetzung in Form eines elektrochromen Dispersionssystems, das mindestens entweder eine Suspension oder ein Kolloid enthält, wobei ein Dispersionsmedium des elektrochromen Dispersionssystems eine elektrochrome Lösung umfasst, die flüssige Lösungsmittel enthält, zu denen ein Hochtemperatur-Lösungsmittel und ein Niedertemperatur-Lösungsmittel gehören, eine kathodische Komponente und eine anodische Komponente, wobei eine Dispersionsphase des elektrochromen Dispersionssystems ein feinteiliges Polymer umfasst;
(2) Herstellen mindestens einer der beiden flexiblen Elektroden (2) derart, dass eine leitfähige Beschichtung auf ein polymeres Substrat in Form von voneinander isolierten, quadratischen, in einer Matrix angeordneten, leitfähigen Abschnitten aufgebracht wird;
(3) Beschichten mindestens einer der flexiblen Elektroden (2) mit der elektrochromen Ausgangszusammensetzung;
(4) Trocknen der auf die flexible(n) Elektrode(n) (2) aufgebrachten elektrochromen Ausgangszusammensetzung, um das Niedertemperatur-Lösungsmittel zu entfernen und eine feste, homogene, gleichmäßige elektrochrome Schicht (1) zu bilden;
(5) Laminieren der flexiblen Elektrode mit der getrockneten elektrochromen Zusammensetzung mit der anderen flexiblen Elektrode (2);
(6) Verbinden aller Bereiche der flexiblen Elektroden (2) mit elektrisch leitenden Sammelschienen (7); und
(7) Abdichten des hermetisch geschlossenen Raums zwischen den beiden flexiblen Elektroden (2).

2. Die elektrochrome Vorrichtung nach Anspruch 1, wobei die elektrochrome Lösung ferner einen indifferenten Elektrolyten umfasst.

3. Die elektrochrome Vorrichtung nach Anspruch 1, wobei das feinteilige Polymer in einer Menge bereitgestellt wird, die ausreicht, um eine feste Schicht der ursprünglichen elektrochromen Zusammensetzung zu bilden.

4. Elektrochromes Bauelement nach Anspruch 1, wobei das Hochtemperaturlösungsmittel und/oder das Niedertemperaturlösungsmittel einzeln oder in Kombination eine chemische Verbindung oder ein Gemisch chemischer Verbindungen umfassen.

## Revendications

1. Dispositif électrochrome comprenant au moins deux électrodes flexibles (2) et un espace hermétiquement clos entre les au moins deux électrodes flexibles, au moins l'une des au moins deux électrodes flexibles étant optiquement transparente, dans lequel l'espace hermétiquement clos entre les au moins deux électrodes flexibles est rempli d'une composition électrochrome, le dispositif électrochrome étant fabriqué par un procédé comprenant :
(1) la préparation d'une composition électrochrome initiale sous la forme d'un système de dispersion électrochrome contenant au moins l'un parmi une suspension et un colloïde, dans laquelle un milieu de dispersion du système de dispersion électrochrome comprend une solution électrochrome comprenant des solvants liquides qui comprennent un solvant à haute température et un solvant à basse température, un composant cathodique, et un composant anodique, dans laquelle une phase de dispersion du système de dispersion électrochrome comprend un polymère finement divisé,
(2) la fabrication d'au moins l'une des deux électrodes flexibles (2) de telle manière qu'un revêtement conducteur est appliqué sur un substrat polymère sous la forme de portions conductrices mutuellement isolées de forme carrée agencées en matrice ;
(3) le revêtement d'au moins l'une des électrodes flexibles (2) avec la composition électrochrome initiale ;
(4) le séchage de la composition électrochrome initiale appliquée sur la ou les électrode(s) flexible(s) (2) pour éliminer le solvant à basse température afin de former une couche électrochrome solide, homogène et uniforme (1) ;
(5) la stratification de l'électrode flexible avec la composition électrochrome séchée avec l'autre électrode flexible (2) ;
(6) la connexion de toutes les portions des électrodes flexibles (2) à des bus électriquement conducteurs (7) ; et
(7) le scellement de l'espace hermétiquement clos entre les deux électrodes flexibles (2).

2. Dispositif électrochrome selon la revendication 1, dans lequel la solution électrochrome comprend en outre un électrolyte indifférent.

3. Dispositif électrochrome selon la revendication 1, dans lequel le polymère finement divisé est fourni en une quantité suffisante pour former une couche solide de la composition électrochrome initiale.

4. Dispositif électrochrome selon la revendication 1, dans lequel le solvant à haute température et/ou le solvant à basse température comprennent, individuellement ou en combinaison, un composé chimique ou un mélange de composés chimiques.
